# EUROPEAN PATENT APPLICATION

(11) **EP 4 201 217 A1**
(43) Date of publication of application: **28.06.2023**
(21) Application number: 21861458.4
(22) Date of filing: 23.08.2021
(51) Int. Cl.: A23F 3/16, A23F 5/24, A23L 2/00, A23L 2/52

(54) **CAFFEINE-CONTAINING BEVERAGE, METHOD FOR PRODUCING CAFFEINE-CONTAINING BEVERAGE, AND METHOD FOR REDUCING BITTERNESS OF CAFFEINE-CONTAINING BEVERAGE**

(30) Priority: 24.08.2020 JP 2020140929
(71) Applicant: Suntory Holdings Limited, Osaka 530-8203 (JP)
(72) Inventor: YOSHII, Takaaki, Soraku-gun, Kyoto 619-0284 (JP); UEMURA, Masahide, Soraku-gun, Kyoto 619-0284 (JP); NAKAHARA, Koichi, Soraku-gun, Kyoto 619-0284 (JP); HATA, Yuto, Soraku-gun, Kyoto 619-0284 (JP)
(74) Representative: Vossius & Partner Patentanwälte Rechtsanwälte mbB
(86) International application number: PCT/JP2021/030704
(87) International publication number: WO 2022/045032

(57) **Abstract**

The present invention aims to provide a caffeine-containing beverage having reduced bitterness. The present invention provides a caffeine-containing beverage containing caffeine and ethyl glycoside, wherein a weight ratio of ethyl glycoside to caffeine (ethyl glycoside/caffeine) is 0.05 to 50, a caffeine concentration is 80 to 1500 ppm, and an ethyl glycoside concentration is 50 to 20000 ppm.

## Description

### TECHNICAL FIELD

The present invention relates to a caffeine-containing beverage and a method of producing the same. The present invention also relates to a method of reducing the bitterness of a caffeine-containing beverage.

### BACKGROUND ART

Beverages containing a relatively large amount of caffeine may have apparent bitterness from caffeine, which may impart negative effects on the drinkability of such beverages. Various methods have been suggested for reducing the caffeine bitterness. For example, Patent Literature 1 discloses reducing the bitterness of caffeine by adding at least one selected from the group consisting of gum ghatti, pullulan, gum arabic, and soy polysaccharides.

### CITATION LIST

### - Patent Literature

Patent Literature 1: JP 2011-78363 A

### SUMMARY OF INVENTION

### - Technical Problem

While the technique described in Patent Literature 1 may be used to reduce the bitterness of tea beverages and coffee beverages which are typical caffeine-containing beverages, the materials such as gum ghatti described in Patent Literature 1 are materials that can be used as thickeners.

Thus, beverages having reduced caffeine bitterness produced using a material such as gum ghatti have a high viscosity, and drinking such beverages brings a feeling of strangeness in some cases.

The present invention aims to provide a caffeine-containing beverage having reduced bitterness and a method of producing the same. The present invention also aims to provide a method of reducing the bitterness of a caffeine-containing beverage.

### - Solution to Problem

As a result of extensive studies to solve the issues described above, the present inventors found that the bitterness of a caffeine-containing beverage can be reduced by adding ethyl glycoside at a predetermined concentration or higher and in a predetermined proportion relative to the caffeine.

Specifically, the present invention relates to the following beverages and the like.
(1) A caffeine-containing beverage containing caffeine and ethyl glycoside, wherein a weight ratio of ethyl glycoside to caffeine (ethyl glycoside/caffeine) is 0.05 to 50, a caffeine concentration is 80 to 1500 ppm, and an ethyl glycoside concentration is 50 to 20000 ppm.
(2) The caffeine-containing beverage according to (1) above, wherein the caffeine concentration is 200 to 1000 ppm.
(3) The caffeine-containing beverage according to (1) or (2) above, wherein the ethyl glycoside concentration is 50 to 10000 ppm.
(4) The caffeine-containing beverage according to any one of (1) to (3) above, wherein the ethyl glycoside is ethyl glucoside.
(5) The caffeine-containing beverage according to any one of (1) to (4) above, wherein the caffeine-containing beverage is a tea beverage or a coffee beverage.
(6) A method of producing a caffeine-containing beverage containing caffeine and ethyl glycoside and having a caffeine concentration of 80 to 1500 ppm, the method including adding ethyl glycoside such that an ethyl glycoside concentration is 50 to 20000 ppm and a weight ratio of ethyl glycoside to caffeine (ethyl glycoside/caffeine) is 0.05 to 50 in the caffeine-containing beverage.
(7) A method of reducing the bitterness of a caffeine-containing beverage having a caffeine concentration of 80 to 1500 ppm, the method including adding ethyl glycoside such that a weight ratio of ethyl glycoside to caffeine (ethyl glycoside/caffeine) is 0.05 to 50 and an ethyl glycoside concentration is 50 to 20000 ppm in the caffeine-containing beverage.

### - Advantageous Effects of Invention

The present invention can provide a caffeine-containing beverage having reduced bitterness and a method of producing the same. The present invention can also provide a method of reducing the bitterness of a caffeine-containing beverage.

### DESCRIPTION OF EMBODIMENTS

### <Caffeine-containing beverage>

The caffeine-containing beverage of the present invention contains caffeine and ethyl glycoside.

The caffeine for use in the present invention is not limited, and it may be a commercially available reagent, a pure product (a purified product having a caffeine content of 98% or higher), a crude product (caffeine content of 50 to 98%), an extract of a plant containing caffeine (coffee beans, tea leaves, cola nuts, and the like), or a concentrate of the extract.

When the caffeine is used in the form of an extract of a plant or a concentrate of the extract, raw materials for extraction which can be used include tea leaves belonging to *Camellia sinensis,* such as green tea, black tea, oolong tea, and pu'er tea; and coffee beans belonging to the genus *Coffea* in the family Rubiaceae. Herein, a beverage mainly containing a tea leaf extract is referred to as a "tea beverage" and a beverage mainly containing a coffee bean extract is referred to as a "coffee beverage".

Examples of the caffeine-containing beverage include coffee beverages, cola, tea beverages (green tea, black tea, pu'er tea, oolong tea, and the like), cocoa, nutrition drinks, and energy drinks.

The caffeine-containing beverage may be a concentrate (portion) of any of the above beverages.

The caffeine-containing beverage may also be a powder of any of the above beverages, which is diluted with cold water or hot water.

Of these beverages, tea beverages and coffee beverages are preferred as the caffeine-containing beverages of the present invention.

Ethyl glycoside is a compound having a structure in which the position-1 hydroxy group of a reducing sugar is replaced by an ethoxy group. A preferred reducing sugar for ethyl glycoside is a monosaccharide, such as glucose, fructose, galactose, mannose, or xylose. The reducing sugar may be in the D form, L form, or DL form. The D form is preferred.

Examples of the ethyl glycoside include ethyl glucoside, ethyl fructoside, ethyl galactoside, ethyl mannoside, and ethyl xyloside. The ethyl glycoside may be of one type or a combination of two or more types. Of these, the ethyl glycoside is preferably ethyl glucoside. The ethyl glucoside may be either ethyl-α-glucoside or ethyl-β-glucoside or may be a mixture of ethyl-α-glucoside and ethyl-β-glucoside. In one embodiment, the ethyl glycoside is preferably ethyl-α-glucoside, more preferably ethyl-α-D-glucoside.

The ethyl glycoside may be produced by any method. For example, the ethyl glycoside can be obtained from a reaction between a reducing sugar and ethanol. For example, the ethyl glucoside can be obtained from a reaction between glucose and ethanol.

In the caffeine-containing beverage of the present invention, the weight ratio of ethyl glycoside to caffeine (ethyl glycoside/caffeine) is 0.05 to 50.

When the weight ratio of ethyl glycoside to caffeine is in the above range, the bitterness from caffeine can be sufficiently reduced by adding ethyl glycoside. Preferably, the weight ratio is 1 to 40.

In the caffeine-containing beverage of the present invention, the caffeine concentration is 80 to 1500 ppm.

A beverage having a caffeine concentration of 80 ppm or more tastes bitter, so that the bitterness reduction by adding ethyl glycoside is effective. Preferably, the caffeine concentration is 200 to 1000 ppm.

The unit "ppm" used herein refers to ppm of weight/volume (w/v).

In the caffeine-containing beverage of the present invention, the ethyl glycoside concentration is 50 to 20000 ppm. Adding ethyl glycoside in an amount of 50 ppm or more is effective in reducing the bitterness from caffeine. Ethyl glycoside does not act to increase the thickness, so that drinking a beverage to which ethyl glycoside is added will not bring a feeling of strangeness.

A high ethyl glycoside concentration may produce off-taste due to addition of ethyl glucoside. Thus, the ethyl glycoside concentration in the caffeine-containing beverage of the present invention is 20000 ppm or less. Preferably, the ethyl glycoside concentration is 50 to 10000 ppm. More preferably, the ethyl glycoside concentration is 50 to 5000 ppm.

The caffeine concentration and the ethyl glycoside concentration in the caffeine-containing beverage can be measured by high performance liquid chromatography (HPLC).

In one embodiment, preferred ranges of the caffeine concentration and the ethyl glycoside concentration are as follows.

When the caffeine concentration is 80 ppm or more and less than 100 ppm, the ethyl glycoside concentration is 50 to 100 ppm.

When the caffeine concentration is 100 ppm or more and less than 200 ppm, the ethyl glycoside concentration is 50 to 5000 ppm (preferably 100 to 5000 ppm).

When the caffeine concentration is 200 ppm or more and less than 500 ppm, the ethyl glycoside concentration is 50 to 10000 ppm.

When the caffeine concentration is 500 ppm or more (preferably 500 to 1000 ppm), the ethyl glycoside concentration is 50 to 20000 ppm (preferably 500 to 10000 ppm) .

When the concentrations are in the above ranges, advantageously, adding ethyl glycoside particularly enhances the bitterness reducing effect, as compared to the case where no ethyl glycoside is added.

The caffeine-containing beverage of the present invention that has been described thus far may contain one or more additives such as fragrances, vitamins, pigments, antioxidants, acidulants, emulsifiers, preservatives, seasonings, extracts, pH regulators, and quality stabilizers, as long as the effect of the present invention is not impaired.

The caffeine-containing beverage of the present invention that has been described thus far can be sealed in a container. In one embodiment, preferably, the caffeine-containing beverage of the present invention is a beverage in a sealed container. The form of the container is not limited. Examples include sealed containers such as bottles, cans, plastic bottles, paper packages, aluminum pouches, and plastic pouches. Beverages in sealed containers and the like can be provided by filling these sealed containers with the caffeine-containing beverage of the present invention.

### <Method of producing caffeine-containing beverage>

The method of producing a caffeine-containing beverage of the present invention is a method of producing a caffeine-containing beverage containing caffeine and ethyl glycoside and having a caffeine concentration of 80 to 1500 ppm, the method including adding ethyl glycoside such that an ethyl glycoside concentration is 50 to 20000 ppm and a weight ratio of ethyl glycoside to caffeine (ethyl glycoside/caffeine) is 0.05 to 50 in the caffeine-containing beverage.

The method and order of adding ethyl glycoside are not limited as long as the ethyl glycoside is added to a caffeine-containing beverage having a caffeine concentration of 80 to 1500 ppm such that the ethyl glycoside concentration is 50 to 20000 ppm and that the weight ratio of ethyl glycoside to caffeine (ethyl glycoside/caffeine) in the caffeine-containing beverage is 0.05 to 50. When the caffeine-containing beverage of the present invention is not an extract of a plant containing caffeine or a concentrate of the extract but a nutrition drink, energy drink, or the like, ethyl glycoside may be added after caffeine is added, caffeine and ethyl glycoside may be added simultaneously, or caffeine may be added after ethyl glycoside is added.

The ethyl glycoside, caffeine, their amounts, and their preferred embodiments are as described above for the caffeine-containing beverage.

### <Method of reducing bitterness of caffeine-containing beverage>

The method of reducing the bitterness of a caffeine-containing beverage of the present invention is a method of reducing the bitterness of a caffeine-containing beverage having a caffeine concentration of 80 to 1500 ppm, the method including adding ethyl glycoside such that a weight ratio of ethyl glycoside to caffeine (ethyl glycoside/caffeine) is 0.05 to 50 and an ethyl glycoside concentration is 50 to 20000 ppm in the caffeine-containing beverage.

Adding ethyl glycoside to a caffeine-containing beverage such that the ethyl glycoside concentration and the weight ratio of ethyl glycoside to caffeine (ethyl glycoside/caffeine) are in the predetermined ranges can sufficiently reduce the bitterness from caffeine.

The ethyl glycoside, caffeine, their amounts, and their preferred embodiments are as described above for the caffeine-containing beverage.

### EXAMPLES

The following provides examples that more specifically describe the present invention. The present invention is not limited to these examples.

In Examples, the ethyl glycoside was ethyl-α-D-glucoside (hereinafter, EG).

### (Example 1)

Samples were produced by varying the caffeine concentration in five levels of 80 ppm, 100 ppm, 200 ppm, 500 ppm, and 1000 ppm and by varying the EG concentration in eight levels of 0 ppm, 50 ppm, 100 ppm, 500 ppm, 1000 ppm, 5000 ppm, 10000 ppm, and 20000 ppm. The samples were produced by dissolving caffeine (food additive grade, Shiratori Pharmaceutical Co., Ltd.) in commercially available mineral water (soft water: hardness of 0 to 100 mg/L) and adding EG thereto.

Two panelists (panelists 1 and 2) experienced in sensory evaluation performed sensory evaluation on the bitterness of each sample. In the sensory evaluation, each panelist tasted the sample (10 mL) in the mouth for five seconds, spit out the sample, and evaluated the bitterness intensity. When evaluating a different sample, each panelist rinsed the mouth with water until the taste in the mouth disappeared. For the sensory evaluation, the panelists had a pre-discussion to exchange views on the bitterness intensity. The panelists agreed on the following criteria and performed the sensory evaluation.

Bitterness reference points were based on the bitterness intensity of a sample not containing EG. The bitterness intensity of mineral water not containing caffeine or EG was given a score of 1; the bitterness intensity of a sample containing 80 ppm caffein and 0 ppm EG (no EG was added) was given a score of 2; a sample containing 200 ppm caffeine and 0 ppm EG was given a score of 3; the bitterness intensity of a sample containing 500 ppm caffeine and 0 ppm EG was given a score of 5; and the bitterness intensity of a sample containing 1000 ppm caffeine and 0 ppm EG was given a score of 6. Specifically, each panelist evaluated the bitterness intensity of each sample in six levels from 1 to 6 points based on the following criteria. Then, the scores given by the panelists were averaged.

- 1:: No bitterness was tasted.
- 2:: The bitterness was tasted only slightly.
- 3:: The bitterness was tasted somewhat slightly.
- 4:: The bitterness was tasted.
- 5:: The bitterness was tasted somewhat strongly.
- 6:: The bitterness was tasted strongly.

Table 1 shows the weight ratio of ethyl glycoside (EG) to caffeine (EG/caffeine) in each sample.
Table 2 shows the result of the sensory evaluation (scores of the bitterness intensity) of each sample by the panelist 1.
Table 3 shows the result of the sensory evaluation (scores of the bitterness intensity) of each sample by the panelist 2.
Table 4 shows the average result of the sensory evaluation (scores of the bitterness intensity) of each sample by the panelists.
Table 5 shows the degree of bitterness reduction by addition of EG, calculated from the results shown in Table 4. The degree of bitterness reduction shown in Table 5 are values of X minus Y (X - Y), where X is a score of a first sample having one of the caffeine concentrations and not containing EG shown in Table 4, and Y is a score of a second sample having the same caffeine concentration as the first sample and containing EG shown in Table 4. When the degree of bitterness reduction is 0.5 or more, the bitterness is reduced as compared to the samples not containing EG. When the degree of bitterness reduction is 0.0, the bitterness is the same as that of the samples not containing EG. When the degree of bitterness reduction is -0.5 or less, the bitterness is increased as compared to the samples not containing EG.

**[Table 1]**

| EG /caffeine | | Caffeine (ppm ) | | | | |
|---|---|---|---|---|---|---|
| | | 80 | 100 | 200 | 500 | 1000 |
| EG (ppm ) | 0 | - | - | - | - | - |
| | 50 | 0.625 | 0.5 | 0.25 | 0.1 | 0.05 |
| | 100 | 1.25 | 1 | 0.5 | 0.2 | 0.1 |
| | 500 | 6.25 | 5 | 2.5 | 1 | 0.5 |
| | 1000 | 12.5 | 10 | 5 | 2 | 1 |
| | 5000 | 62.5 | 50 | 25 | 10 | 5 |
| | 10000 | 125 | 100 | 50 | 20 | 10 |
| | 20000 | 250 | 200 | 100 | 40 | 20 |

**[Table 2]**

| Bitterness intensity (Panelist1) | | Caffeine (ppm ) | | | | |
|---|---|---|---|---|---|---|
| | | 80 | 100 | 200 | 500 | 1000 |
| EG (ppm ) | 0 | 2 | 2 | 3 | 5 | 6 |
| | 50 | 1 | 1 | 2 | 4 | 5 |
| | 100 | 1 | 1 | 2 | 4 | 5 |
| | 500 | - | 1 | 1 | 4 | 4 |
| | 1000 | - | 1 | 1 | 3 | 3 |
| | 5000 | - | 1 | 2 | 4 | 4 |
| | 10000 | - | 2 | 3 | 4 | 4 |
| | 20000 | - | 3 | 3 | 4 | 4 |

**[Table 3]**

| Bitterness intensity (Panelist2) | | Caffeine (ppm ) | | | | |
|---|---|---|---|---|---|---|
| | | 80 | 100 | 200 | 500 | 1000 |
| EG (ppm ) | 0 | 2 | 2 | 3 | 5 | 6 |
| | 50 | 2 | 2 | 2 | 5 | 5 |
| | 100 | 2 | 1 | 2 | 5 | 5 |
| | 500 | - | 1 | 2 | 4 | 5 |
| | 1000 | - | 1 | 2 | 4 | 4 |
| | 5000 | - | 1 | 2 | 4 | 4 |
| | 10000 | - | 2 | 2 | 4 | 4 |
| | 20000 | - | 3 | 3 | 3 | 3 |

**[Table 4]**

| Bitterness intensity (average) | | Caffeine (ppm ) | | | | |
|---|---|---|---|---|---|---|
| | | 80 | 100 | 200 | 500 | 1000 |
| EG (ppm ) | 0 | 2.0 | 2.0 | 3.0. | 5.0 | 6.0 |
| | 50 | 1.5 | 1.5 | 2.0 | 4.5 | 5.0 |
| | 100 | 1.5 | 1.0 | 2.0 | 4.5 | 5.0 |
| | 500 | - | 1.0 | 1.5 | 4.0 | 4.5 |
| | 1000 | - | 1.0 | 1.5 | 3.5 | 3.5 |
| | 5000 | - | 1.0 | 2.0 | 4.0 | 4.0 |
| | 10000 | - | 2.0 | 2.5 | 4.0 | 4.0 |
| | 20000 | - | 3.0 | 3.0 | 3.5 | 3.5 |

**[Table 5]**

| Degree of bitterness reduction | | Caffeine (ppm ) | | | | |
|---|---|---|---|---|---|---|
| | | 80 | 100 | 200 | 500 | 1000 |
| EG (ppm ) | 0 | - | - | - | - | - |
| | 50 | 0.5 | 0.5 | 1.0 | 0.5 | 1.0 |
| | 100 | 0.5 | 1.0 | 1.0 | 0.5 | 1.0 |
| | 500 | - | 1.0 | 1.5 | 1.0 | 1.5 |
| | 1000 | - | 1.0 | 1.5 | 1.5 | 2.5 |
| | 5000 | - | 1.0 | 1.0 | 1.0 | 2.0 |
| | 10000 | - | 0.0 | 0.5 | 1.0 | 2.0 |
| | 20000 | - | -1.0 | 0.0 | 1.5 | 2.5 |

The above results show that caffeine bitterness can be reduced when the ethyl glycoside concentration in the beverage is 50 to 20000 ppm and the weight ratio of ethyl glycoside to caffeine (ethyl glycoside/caffeine) is 0.05 to 50.

### (Comparative Example 1)

A sample was produced as in Example 1 except that the EG concentration was 10 ppm and subjected to sensory evaluation. Table 6 shows the weight ratio of ethyl glycoside (EG) to caffeine (EG/caffeine) in each sample.

Table 7 shows the results of the sensory evaluation (scores of the bitterness intensity) of each sample.

**[Table 6]**

| EG /caffeine | | Caffeine (ppm ) | | | | |
|---|---|---|---|---|---|---|
| | | 80 | 100 | 200 | 500 | 1000 |
| EG (ppm ) | 0 | - | - | - | - | - |
| | 10 | 0.125 | 0.1 | 0.05 | 0.02 | 0.01 |

**[Table 7]**

| Bitterness intensity (average) | | Caffeine (ppm ) | | | | |
|---|---|---|---|---|---|---|
| | | 80 | 100 | 200 | 500 | 1000 |
| EG (ppm ) | 0 | 2.0 | 2.0 | 3.0 | 5.0 | 6.0 |
| | 10 | 2.0 | 2.0 | 2.5 | 5.0 | 6.0 |

The above results show that the effect of reducing the caffeine bitterness is poor when the ethyl glycoside concentration in the beverage is 10 ppm.

### (Example 2)

A sample was produced by adding EG to a commercially available coffee beverage containing 400 ppm caffeine to give an EG concentration of 5000 ppm. The weight ratio of ethyl glycoside (EG) to caffeine (EG/caffeine) was 12.5.

A coffee beverage was prepared by further adding caffeine to a commercially available coffee beverage containing 400 ppm caffeine to give a caffeine concentration of 900 ppm and adding EG thereto to give a concentration of 5000 ppm. The weight ratio of ethyl glycoside (EG) to caffeine (EG/caffeine) was 5.6.

The bitterness intensity of each sample was evaluated as in Example 1.

Table 8 shows average scores of the bitterness intensity.

**[Table 8]**

| Bitterness intensity (average) | | Coffee beverage | |
|---|---|---|---|
| | | Caffeine 400 ppm | Caffeine 900 ppm |
| EG (ppm ) | 0 | 4.0 | 6.0 |
| | 5000 | 1.0 | 2.0 |

The above results show that the caffeine bitterness of a commercially available coffee beverage having a caffeine concentration of 80 ppm or more can also be reduced by adding ethyl glycoside such that the ethyl glycoside concentration in the beverage is 50 to 20000 ppm and the weight ratio of ethyl glycoside to caffeine (ethyl glycoside/caffeine) is 0.05 to 50.

### INDUSTRIAL APPLICABILITY

The present invention can provide a caffeine-containing beverage having reduced bitterness from caffeine.

## Claims

1. A caffeine-containing beverage comprising:
caffeine; and
ethyl glycoside,
wherein a weight ratio of ethyl glycoside to caffeine, i.e., ethyl glycoside/caffeine, is 0.05 to 50,
a caffeine concentration is 80 to 1500 ppm, and
an ethyl glycoside concentration is 50 to 20000 ppm.

2. The caffeine-containing beverage according to claim 1,
wherein the caffeine concentration is 200 to 1000 ppm.

3. The caffeine-containing beverage according to claim 1 or 2,
wherein the ethyl glycoside concentration is 50 to 10000 ppm.

4. The caffeine-containing beverage according to any one of claims 1 to 3,
wherein the ethyl glycoside is ethyl glucoside.

5. The caffeine-containing beverage according to any one of claims 1 to 4,
wherein the caffeine-containing beverage is a tea beverage or a coffee beverage.

6. A method of producing a caffeine-containing beverage containing caffeine and ethyl glycoside and having a caffeine concentration of 80 to 1500 ppm, the method comprising:
adding ethyl glycoside such that an ethyl glycoside concentration is 50 to 20000 ppm and a weight ratio of ethyl glycoside to caffeine, i.e., ethyl glycoside/caffeine, is 0.05 to 50 in the caffeine-containing beverage.

7. A method of reducing the bitterness of a caffeine-containing beverage having a caffeine concentration of 80 to 1500 ppm, the method comprising:
adding ethyl glycoside such that a weight ratio of ethyl glycoside to caffeine, i.e., ethyl glycoside/caffeine, is 0.05 to 50 and an ethyl glycoside concentration is 50 to 20000 ppm in the caffeine-containing beverage.
